# EUROPÄISCHE PATENTSCHRIFT

(11) **EP 1 066 189 B1**
(45) Veröffentlichungstag und Bekanntmachung des Hinweises auf die Patenterteilung: **09.10.2002**
(21) Anmeldenummer: 00909107.5
(22) Anmeldetag: 26.01.2000
(51) Int. Cl.: B62D 1/04

(54) **LENKRAD FÜR KRAFTFAHRZEUGE**
STEERING WHEEL FOR MOTOR VEHICLES
VOLANT DE DIRECTION POUR VEHICULE

(30) Priorität: 27.01.1999 DE 29901404 U
(43) Veröffentlichungstag der Anmeldung: 10.01.2001
(73) Patentinhaber: TRW Automotive Safety Systems GmbH & Co. KG, 63743 Aschaffenburg (DE)
(72) Erfinder: DREFAHL, Klaus, D-63457 Hanau (DE)
(74) Vertreter: Degwert, Hartmut, Dipl.-Phys.
(86) Internationale Anmeldenummer: EP0000584
(87) Internationale Veröffentlichungsnummer: WO00044604

(56) Entgegenhaltungen:
- EP-A- 0 177 687
- EP-A- 0 309 316
- EP-A- 0 814 010

## Beschreibung

Die Erfindung betrifft ein Lenkrad für Kraftfahrzeuge gemäß dem Oberbegriff des Anspruchs 1 und ein Verfahren zu dessen Herstellung, gemäß dem Oberbegriff des Anspruchs 9.

Bei herkömmlichen Lenkrädern umfaßt das meist metallische Skelett den Nabenbereich, die Speichen und den Lenkradkranz. Im Nabenbereich sind hohe Materialfestigkeiten erforderlich, um alle bei bestimmungsgemäßem Gebrauch des Lenkrades auftretenden Kräfte möglichst platzsparend auf die in der Fahrzeugkarosserie befestigte Lenksäule übertragen zu können. Auch die Speichen- und Kranzbereiche des Lenkradskelettes müssen in erster Linie für die zu übertragenden Lenkkräfte ausgelegt werden. Darüber hinaus werden diese Bereiche des Lenkradskelettes schon seit geraumer Zeit derart konzipiert, daß sie bei einem unfallbedingten Aufprall des Fahrzeuglenkers einen hohen Teil der Aufprallenergie durch Formänderung absorbieren können und damit das Verletzungsrisiko senken.

Lenkradskelette werden entweder aus metallischen Halbzeugteilen, die spangebend oder nicht spangebend vorgeformt sind und die mittels Schweiß- oder Lötprozessen miteinander verbunden sind, aufgebaut oder gießtechnisch und dann meist aus einer Leichtmetall-Legierung einteilig hergestellt. Dabei ist man selbstverständlich bemüht, allen mechanischen Anforderungen mit einem möglichst geringen Materialaufwand gerecht zu werden, wobei die gießtechnischen Herstellungsverfahren im allgemeinen zwar teurer sind, bei der Formgebung gegenüber der Herstellung aus Halbzeugformteilen aber wesentlich mehr Möglichkeiten bieten.

Ein weiterer, wesentlicher Aspekt bei der Gestaltung von Lenkradskeletten ergibt sich aus der Notwendigkeit der Befestigung des Airbagmoduls, das bei allen modernen Kraftfahrzeugen serienmäßig im Lenkrad angeordnet ist. Bei der explosionsartigen Entfaltung des Luftsacks ergeben sich kurzzeitig ganz erhebliche Reaktionskräfte, die von der Luftsackbefestigung zuverlässig auf das Lenkradskelett übertragen werden müssen.

Ein Lenkrad der eingangs genannten Art ist aus der EP-A-309 316 bekannt. Das darin gezeigte Lenkrad ist mit Ausnahme einer metallischen Nabe ausschließlich aus faserverstärktem Kunststoff hergestellt, wobei zur Herstellung des Lenkrads faserverstärkte Kunststoffzuschnitte in entsprechenden Formen gepreßt werden.

Ferner ist aus der EP-A-814 010 ein Lenkrad bekannt, dessen einteiliges Blech-Skelett einen an die Nabe angrenzenden Bereich mit Befestigungsmitteln aufweist, der einen Absatz zur Abstützung eines Gassack-Moduls bildet.

Aufgabe der Erfindung ist es, ein Lenkrad für Kraftfahrzeuge zur Verfügung zu stellen, das ganz oder nahezu vollständig ohne das den Herstellungsaufwand vergrößernde Lenkradskelett auskommt und für die Aufnahme eines Gassack-Moduls geeignet ist.

Diese Aufgabe wird durch ein Lenkrad mit den Merkmalen des Anspruchs 1 gelöst. Geeignete Kunststoffe für den Formkörper sind dieselben, die bisher für die Ummantelung der Lenkradskelette verwendet wurden. Diese Kunststoffe sind insbesondere Polyurethan, Polyamid und Polypropylen. Vorzugsweise werden diese Kunststoffe auch, wie bei den bisher üblichen Ummantelungen, geschäumt. Es wurde gefunden, daß durch Zusetzen von Verstärkungsfasern zur Kunststoffmasse eine solche mechanische Festigkeit des Lenkradkörpers erzielt werden kann, daß sich die Verwendung eines Lenkradskeletts erübrigt. Im Bereich der Nabe des Lenkrades ist die Verwendung einer Armierungseinlage oder Haltestruktur vorgesehen die dann zugleich die Abstützung und Halterung eines Gassack-Moduls unterstützt.

Eine besonders hohe Festigkeit und Formstabilität des Lenkrades wird bei der bevorzugten Ausführungsform dadurch erreicht, daß der Formkörper im Bereich nahe seiner Außenfläche durch überwiegend gestreckt und parallel zur Außenfläche angeordnete Fasern verstärkt ist; in seinem Inneren kann der Formkörper durch regellos bzw. zufällig verteilte Fasern verstärkt sein, jedoch sollten die Fasern überwiegend in gestreckter Form vorliegen.

Durch die Erfindung wird ferner ein Verfahren zur Herstellung des Lenkrades geschaffen. Die Besonderheit des Verfahrens gemäß den kennzeichnenden Merkmalen des Anspruchs 9 besteht darin, daß der Nabenkern und die Armierungseinlage bzw. Haltestruktur in eine Gießform eingebracht und eine aus Kunststoff und Verstärkungsfasern bestehende spritzbare Masse in die Gießform eingebracht wird. Die Masse wird durch einen vorzugsweise programmgesteuert verfahrbaren Spritzkopf in ein offenes Formwerkzeugteil drucklos eingebracht. Dabei werden die Verstärkungsfasern der gespritzten Masse im Verlauf des Spritzens zugesetzt. Nach dem Einspritzen der Masse und ggf. vor dem Aufschäumen derselben wird die Gießform geschlossen. Die Dosierung der Verstärkungsfasern erfolgt vorzugsweise im Verlauf des Spritzens der Masse, entsprechend den angestrebten mechanischen Eigenschaften der verschiedenen Bereiche des Lenkrades, vorzugsweise ebenfalls programmgesteuert.

Durch Anwendung des erfindungsgemäßen Verfahrens wird in besonders vorteilhafter Weise erreicht, daß die Verstärkungsfasern im Bereich nahe der Außenfläche überwiegend gestreckt sowie parallel zur Außenfläche angeordnet sind, während sie im Inneren des Formkörpers auch regellos und zufällig angeordnet sein können. Die Verstärkungsfasern sind aber überwiegend in gestreckter Form vorhanden. Die Verstärkungsfasern bilden eine auf Zug und Druck hoch beanspruchbare Schale des Formkörpers. Aufgrund dieser Beschaffenheit des Formkörpers hat dieser die angestrebten mechanischen Eigenschaften, insbesondere seine Biegesteifigkeit und die für den Energieabbau bei einem Aufprall benötigte plastische Verformbarkeit.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1 schematisch einen radialen Schnitt eines herkömmlichen Lenkrades;
- Fig. 2 einen radialen Schnitt eines beispielhaften Lenkrades;
- Fig. 3 einen vergrößerten Teilschnitt einer ersten erfindungsgemäßen Ausführungsvariante; und
- Fig. 4 einen vergrößerten Teilschnitt einer zweiten erfindungsgemäßen Ausführungsvariante.

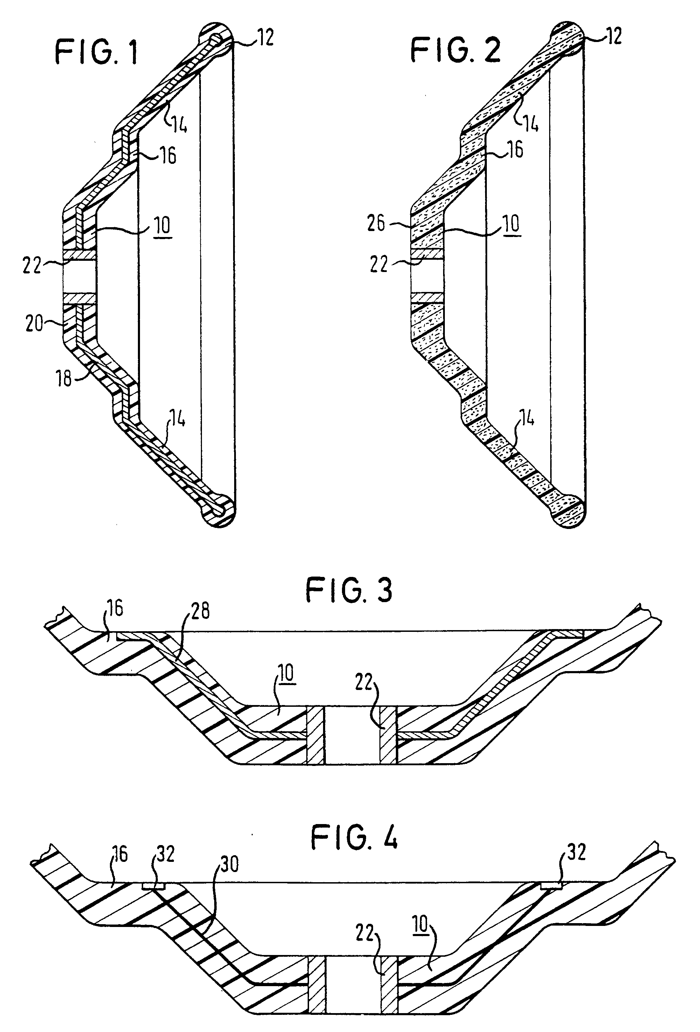

Das in Fig. 1 gezeigte herkömmliche Lenkrad für Kraftfahrzeuge hat eine Nabe 10, einen Lenkradkranz 12 und mehrere den Lenkradkranz 12 mit der Nabe 10 verbindende Speichen 14. Die Nabe 10 bildet im Bereich des Übergangs zu den Speichen 14 einen Absatz 16 zur Abstützung und Befestigung eines Gassack-Moduls.

Das in Fig. 1 gezeigte, herkömmliche Lenkrad besteht aus einem metallischen Skelett 18 und einer Ummantelung 20 aus Kunststoff. Das Skelett 18 erstreckt sich von einem Nabenkern 22 in Form einer Buchse durch die Nabe 10, den Absatz 16, die Speichen 14 und bis in den Lenkradkranz 12. Die Ummantelung 20 besteht aus einem vorzugsweise geschäumten Kunststoff wie Polyurethan.

Bei der in Fig. 2 gezeigten beispielhaften Ausführung des Lenkrades ist das Lenkradskelett vollständig entfallen. Die Nabe 10 besteht aus dem Nabenkern 22 in Form einer Metallbuchse und einem Grundkörper 26, der den Nabenkern 22 umgibt und sich bis zu dem Absatz 16 erstreckt. Der Grundkörper 26 bildet mit den Speichen 14 und dem Lenkradkranz 12 einen Formkörper aus faserverstärktem Kunststoff.

Die erfindungsgemäße Herstellung des Lenkrades erfolgt vorzugsweise durch ein spezielles Gießverfahren, bei dem die plastifizierte Kunststoffmasse in ein offenes Formwerkzeug drucklos eingebracht wird. Das Einbringen der Kunststoffmasse erfolgt mittels einer verfahrbaren Spritzdüse, die entlang der Kavität des Werkzeugteils geführt wird, insbesondere programmgesteuert. Bei dem Spritzvorgang werden der gespritzten Kunststoffmasse Verstärkungsfasern zugesetzt. Vorteilhaft sind mineralische Fasern wie Glasfasern, Kohlenstoffasern, Aramidfasern oder Metallfasern; aber auch organische Verstärkungsfasern sind geeignet.

Geeignete Kunststoffe sind insbesondere Polyurethan, Polyamid und Polypropylen.

Bei der bevorzugten Ausführungsform des Verfahrens wird der Kunststoff geschäumt.

Bei Anwendung des beschriebenen Verfahrens entsteht ein Lenkrad mit einem Formkörper, bei dem die Verstärkungsfasern im Bereich nahe der Außenfläche überwiegend gestreckt und parallel zur Außenfläche angeordnet sind. Im Inneren seines Querschnitts hat der Formkörper auch regellos angeordnete und verteilte Verstärkungsfasern. Die mechanischen Eigenschaften, insbesondere seine Biegesteifigkeit, verdankt der Formkörper überwiegend den im Bereich nahe seiner Außenfläche gestreckt und parallel zu dieser Fläche angeordneten Verstärkungsfasern, die so auf Zug und Druck beansprucht werden.

Bei der in Fig. 3 gezeigten erfindungsgemäßen Ausführungsform ist die Nabe 10 durch eine metallische Armierungseinlage 28 verstärkt, die mit dem buchsenförmigen Nabenkern 22 verbunden ist und sich bis in den Bereich des Absatzes 16 erstreckt. Die Armierungseinlage 28 dient überwiegend der Abstützung und Befestigung eines Gassack-Moduls. Dazu sind die Enden der Armierungseinlage 28 im Bereich des Absatzes 16 als Befestigungselemente ausgebildet, beispielsweise nach Art von Schraubmuttern, die mit der Oberfläche des Absatzes 16 bündig sind.

Bei der in Fig. 4 gezeigten erfindungsgemäßen Ausführungsform ist die Armierungseinlage durch eine Haltestruktur 30 ersetzt, die an ihren äußeren Enden im Bereich des Absatzes 16 Befestigungselemente 32 wie Schraubmuttern hält.

Die Armierungseinlage 28 bei der Ausführungsform nach Fig. 3 bzw. die Haltestruktur 30 bei der Ausführungsform nach Fig. 4 wird vor dem Einbringen der Kunststoffmasse mit dem Nabenkern 22 in die Kavität des Formwerkzeugs eingesetzt. Nach dem Einbringen der Kunststoffmasse ist die Armierungseinlage 28 bzw. die Haltestruktur 30 in den Formkörper eingebettet.

## Patentansprüche

1. Lenkrad für Kraftfahrzeuge, mit einer Nabe (10), einem Lenkradkranz (12) und mehreren den Lenkradkranz (12) mit der Nabe (10) verbindenden Speichen (14), wobei:
die Nabe (10) einen Nabenkern (22) zur Befestigung an einer Lenkwelle und einen den Nabenkern (22) umgebenden Grundkörper (26) aus faserverstärktem Kunststoff aufweist;
die Speichen (14) einteilig und durchgehend mit dem Grundkörper (26) der Nabe (10) aus faserverstärktem Kunststoff geformt sind;
der Lenkradkranz (12) einteilig und durchgehend mit den Speichen (14) aus faserverstärktem Kunststoff geformt ist;
der Grundkörper (26) mit den Speichen (14) und dem Lenkradkranz (12) einen selbsttragenden Formkörper bildet;
**dadurch gekennzeichnet, daß** der Grundkörper (26) der Nabe (10) am Übergangsbereich zu den Speichen (14) einen Absatz (16) zur Abstützung eines Gassack-Moduls bildet;
eine mit dem Nabenkern (22) verbundene Armierungseinlage (28) oder Haltestruktur (30) vorgesehen ist, die sich bis in den Bereich des Absatzes (16) erstreckt; und
an den äußeren Enden der Armierungseinlage (28) bzw. Haltestruktur (30) Befestigungselemente (32) zur Befestigung des Gassack-Moduls vorgesehen sind.

2. Lenkrad nach Anspruch 1, **dadurch gekennzeichnet, daß** der Grundkörper (26) eine Armierungseinlage (28) aufweist und der Nabenkern (22) und die Armierungseinlage (28) metallisch sind.

3. Lenkrad nach einem der vorstehenden Ansprüche, **dadurch gekennzeichnet, daß** die Befestigungselemente (32) im Bereich des Absatzes (16) in den Formkörper eingebettet sind.

4. Lenkrad nach einem der vorstehenden Ansprüche, **dadurch gekennzeichnet, daß** der Formkörper im Bereich nahe seiner Außenfläche durch überwiegend gestreckt und parallel zur Außenfläche angeordnete Fasern verstärkt ist.

5. Lenkrad nach Anspruch 4, **dadurch gekennzeichnet, daß** der Formkörper innen durch überwiegend regellos verteilte Fasern verstärkt ist.

6. Lenkrad nach einem der vorstehenden Ansprüche, **dadurch gekennzeichnet, daß** der Kunststoff des Formkörpers einer der folgenden ist: Polyurethan, Polyamid, Polypropylen.

7. Lenkrad nach Anspruch 6, **dadurch gekennzeichnet, daß** der Kunststoff geschäumt ist.

8. Lenkrad nach einem der vorstehenden Ansprüche, **dadurch gekennzeichnet, daß** die den Formkörper verstärkenden Fasern unter folgenden ausgewählt sind: Glasfasern, Kohlenstofffasern, Aramidfasern, Metallfasern.

9. Verfahren zur Herstellung eines Lenkrades nach einem der vorstehenden Ansprüche bei dem der Nabenkern (22) in ein Formwerkzeug eingebracht wird, **dadurch gekennzeichnet, daß** zusätzlich die Armierungseinlage (28) bzw. die Haltestruktur (30), in ein Formwerkzeug eingebracht werden, und eine aus Kunststoff und Verstärkungsfasern bestehende spritzbare Masse durch einen verfahrbaren Spritzkopf in das Formwerkzeug drucklos cingebracht wind, wobei die Verstärkungsfasern der gespritzten Masse im Verlauf des Spritzens zugesetzt werden, und das Formwerkzeug nach dem Einspritzen der Masse geschlossen wird.

10. Verfahren nach Anspruch 9, **dadurch gekennzeichnet, daß** die Masse durch einen verfahrbaren Spritzkopf in ein offenes Formwerkzeugteil drucklos eingebracht wird, wobei die Verstärkungsfasern der gespritzten Masse im Verlauf des Spritzens zugesetzt werden, und die Gießform nach dem Einspritzen der Masse geschlossen wird.

11. Verfahren nach Anspruch 11, **dadurch gekennzeichnet, daß** die Dosierung der Verstärkungsfasern im Verlauf des Spritzens der Masse variiert wird.

## Claims

1. A steering wheel for motor vehicles, comprising a hub (10), a steering wheel rim (12) and a plurality of spokes (14) connecting the steering wheel rim (12) with the hub (10),
the hub (10) comprising a hub core (22) for fastening to a steering shaft and a base body (26) which surrounds the hub core (22) and is made of a fiber-reinforced plastic material;
the spokes (14) being integrally and continuously molded with the base body (26) of the hub (10) from a fiber-reinforced plastic material;
the steering wheel rim (12) being integrally and continuously molded with the spokes (14) from a fiber-reinforced plastic material;
the base body (26) together with the spokes (14) and the steering wheel rim (12) forming a self-supporting shaped body;
**characterized in that** at the region of transition to the spokes (14) the base body (26) of the hub (10) forms a shoulder (16) for supporting a gas bag module;
a reinforcing insert (28) or mounting structure (30) is provided which is connected with the hub core (22) and extends up to the region of the shoulder (16); and
fastening elements (32) for fastening the gas bag module are provided at the outer ends of the reinforcing insert (28) or the mounting structure (30).

2. The steering wheel according to claim 1, **characterized in that** the base body (26) comprises a reinforcing insert (28) and that the hub core (22) and the reinforcing insert (28) are made of metal.

3. The steering wheel according to either of the preceding claims, **characterized in that** the fastening elements (32) are embedded in the shaped body in the region of the shoulder (16).

4. The steering wheel according to any of the preceding claims, **characterized in that** in the region near its outer surface the shaped body is reinforced by fibers which are arranged predominantly stretched and parallel to the outer surface.

5. The steering wheel according to claim 4, **characterized in that** the shaped body is reinforced internally by predominantly irregularly distributed fibers.

6. The steering wheel according to any of the preceding claims, **characterized in that** the plastic material of the shaped body is one of the following: polyurethane, polyamide, polypropylene.

7. The steering wheel according to claim 6, **characterized in that** the plastic material is foamed.

8. The steering wheel according to any of the preceding claims, **characterized in that** the fibers reinforcing the shaped body are selected from the following: glass fibers, carbon fibers, aramide fibers, metal fibers.

9. A method of manufacturing a steering wheel according to any of the preceding claims, wherein the hub core (22) is placed into a form tool, **characterized in that** the reinforcing insert (28) or the mounting structure (30) is additionally placed into a form tool, and an injectable mass, consisting of plastic material and reinforcing fibers, is introduced without pressure into the form tool by means of a movable injection head, the reinforcing fibers being added to the injected mass in the course of injection molding and the form tool being closed after injection of the mass.

10. The method according to claim 9, **characterized in that** the mass is introduced without pressure into an open form tool part by means of a movable injection head, the reinforcing fibers being added to the injected mass in the course of injection molding and the mold being closed after injection of the mass.

11. The method according to claim 10, **characterized in that** the metering of the reinforcing fibers is varied in the course of injecting the mass.

## Revendications

1. Volant pour véhicules, comportant un moyeu (10), une couronne de volant (12) et plusieurs rayons (14) reliant la couronne de volant (12) au moyeu (10),
le moyeu (10) présentant un noyau (22) du moyeu pour une fixation à un arbre de direction et un corps de base (26) en matière plastique renforcée par des fibres, entourant le noyau (22) du moyeu ;
les rayons (14) sont moulés en matière plastique renforcée par des fibres, d'un seul tenant et de manière continue avec le corps de base (26) du moyeu (10) ;
la couronne de volant (12) est moulée en matière plastique renforcée par des fibres, d'un seul tenant et de manière continue avec les rayons (14) ;
le corps de base (26) forme avec les rayons (14) et la couronne de volant (12) un corps moulé autoportant ;
**caractérisé en ce que** le corps de base (26) du moyeu (10) forme dans la zone de transition avec les rayons (14) un gradin (16) pour soutenir un module de coussin à gaz ;
**en ce qu'**il est prévu une garniture de renforcement (28) ou une structure de maintien (30) reliée au noyau (22) du moyeu, laquelle s'étend jusque dans la zone du gradin (16) ; et
**en ce qu'**aux extrémités extérieures de la garniture de renforcement (28) ou de la structure de maintien (30) sont prévus des éléments de fixation (32) pour fixer le module de coussin à gaz.

2. Volant selon la revendication 1, **caractérisé en ce que** le corps de base (26) présente un insert de renforcement (28), et le noyau (22) du moyeu et l'insert de renforcement sont métalliques.

3. Volant selon l'une des revendications précédentes, **caractérisé en ce que** les éléments de fixation (32) sont noyés dans le corps moulé, dans la zone du gradin (16).

4. Volant selon l'une des revendications précédentes, **caractérisé en ce que** le corps moulé est renforcé dans la zone proche de sa surface extérieure par des fibres agencées pour la plupart allongées et parallèles à la surface extérieure.

5. Volant selon la revendication 4, **caractérisé en ce que** le corps moulé est renforcé à l'intérieur par des fibres réparties pour la plupart de manière irrégulière.

6. Volant selon l'une des revendications précédentes, **caractérisé en ce que** la matière plastique du corps moulé est une des suivantes : polyuréthanne, polyamide, polypropylène.

7. Volant selon la revendication 6, **caractérisé en ce que** la matière plastique est expansée.

8. Volant selon l'une des revendications précédentes, **caractérisé en ce que** les fibres renforçant le corps moulé sont choisies parmi des fibres de verre, des fibres de carbone, des fibres d'Aramide, des fibres métalliques.

9. Procédé de fabrication d'un volant selon l'une des revendications précédentes, dans lequel le noyau (22) du moyeu est placé dans un outil de moulage, **caractérisé en ce que** l'insert de renforcement (28) ou la structure de maintien (30), respectivement, est additionnellement placé dans un outil de moulage, et **en ce qu'**une masse injectable constituée de matière plastique et de fibres de renforcement est introduite sans pression dans l'outil de moulage, par une tête d'injection déplaçable, les fibres de renforcement de la masse injectée étant ajoutées au cours de l'injection, et l'outil de moulage étant fermé après l'injection de la masse.

10. Procédé selon la revendication 9, **caractérisé en ce que** la masse est introduite sans pression dans une partie d'outil de moulage ouverte, par une tête d'injection déplaçable, les fibres de renforcement de la masse injectée étant ajoutées au cours de l'injection, et le moule étant fermé après l'injection de la masse.

11. Procédé selon la revendication 10, **caractérisé en ce que** le dosage des fibres de renforcement est varié au cours de l'injection de la masse.
